# EUROPÄISCHE PATENTANMELDUNG

(11) **EP 0 857 632 A2**
(43) Veröffentlichungstag der Anmeldung: **12.08.1998**
(21) Anmeldenummer: 98100633.1
(22) Anmeldetag: 15.01.1998
(51) Int. Cl.: B60T 7/10, B60T 7/20

(54) **Zugvorrichtung mit Auflaufbremseinrichtung für Kraftfahrzeuganhänger**

(30) Priorität: 06.02.1997 DE 29702064 U
(71) Anmelder: Knott GmbH, D-83125 Eggstätt (DE)
(72) Erfinder: Knott, Valentin, Dipl.-Ing., 83254 Breitbrunn (DE); Gimpl, Gerhard, 83362 Surberg (DE); Strasser, Josef, 83254 Breitbrunn (DE); Maier, Klaus, 83361 Kienberg (DE)
(74) Vertreter: Bauer, Friedrich, Dipl.-Ing.

(57) **Zusammenfassung**

Bei einer Zugvorrichtung mit Auflaufbremseinrichtung für Kraftfahrzeuganhänger mit einer sich nach unten erstreckenden Konsole (11) sind die Konsolenwangen (11a, 11b) als am Gehäuse (5) angeschweißte oder angeschraubte stabile Blechteile ausgebildet. Ein Handbremshebel (15) ist in unmittelbarer Nachbarschaft zu der einen Schutzbügel (22) aufweisenden Konsolenwange (11a) angeordnet.

## Beschreibung

Die Erfindung betrifft eine Zugvorrichtung mit Auflaufbremseinrichtung für Kraftfahrzeuganhänger mit einer sich von einem rohrförmigen Gehäuse aus nach unten erstreckenden Konsole gemäß dem Oberbegriff des Patentanspruches 1.

Bei bekannten Zugvorrichtungen dieser Art stehen sowohl das untere Ende des Handbremshebels als auch der Umlenkhebel, der einerseits beim Bremsen durch die Auflaufbremseinrichtung betätigt wird und andererseits auch durch den Handbremshebel verschwenkt werden kann, nach unten über das Gehäuse der Auflaufbremseinrichtung hinaus. Es muß daher ein Schutz vorgesehen sein, damit im Falle des unbeabsichtigten Lösens der Anhängerkupplung vom Kraftfahrzeug die über das Abreißseil betätigte Bremse nicht beim Aufschlagen der Zugvorrichtung auf den Boden gelöst wird.

Hierzu sind Schutzbügel bekannt, die vor der Konsole als zusätzliches Abstützelement auf der Unterseite des Gehäuses angeordnet sind. Diese zusätzliche Abstützelemente erhöhen jedoch die Gesamtanzahl der Teile, sind optisch nicht besonders ansprechend und verfangen sich, da sie sich keilartig nach unten erstrecken, unter Umständen in Bodenunebenheiten, was zu einem Umstürzen des Anhängers führen kann.

Aus der G 93 08 095.6 U1 ist bereits eine Zugvorrichtung gemäß dem Oberbegriff des Anspruches 1 bekannt, bei welcher der Schutzbügel in die Konsole zur Lagerung des Handbremshebels und des Umlenkhebels integriert ist. Die beiden Konsolenwangen sind an das als Gußteil ausgebildete Gehäuse der Auflaufbremseinrichtung angegossen, wobei die vom Handbremshebel entfernt liegende Konsolenwange nach unten verlängert ist und sich über den Umlenkhebel und Handbremshebel hinaus erstreckt. Die dortige Konsole ist bereits optisch ansprechend und funktionell ausgebildet, ist jedoch nur für relativ schwere Gußgehäuse geeignet.

Der Erfindung liegt die Aufgabe zugrunde, eine Zugvorrichtung mit Auflaufbremseinrichtung für Kraftfahrzeuganhänger gemäß dem Oberbegriff des Anspruches 1 zu schaffen, welche möglichst einfach und gewichtssparend aufgebaut und optisch ansprechend gestaltet ist und beim Lösen der Anhängerkupplung vom Kraftfahrzeug auf sichere Weise verhindert, daß sich die Bremse des Kraftfahrzeuganhängers unbeabsichtigterweise löst.

Diese Aufgabe wird erfindungsgemäß durch die Merkmale des Anspruches 1 gelöst. Vorteilhafte Ausgestaltungen der Erfindung sind in den weiteren Ansprüchen beschrieben.

Bei der erfindungsgemäßen Zugvorrichtung sind die Konsolenwangen als am Gehäuse angeschweißte oder angeschraubte stabile Blechteile ausgebildet. Weiterhin ist der Bremshebel in unmittelbarer Nachbarschaft zu der den Schutzbügel aufweisenden Konsolenwange angeordnet.

Die Ausbildung der Konsole in der Form eines Blechteilpaares, das am Gehäuse angeschweißt oder angeschraubt wird, erlaubt eine Ausführung mit relativ geringem Gewicht. Die Anordnung des Bremshebels in unmittelbarer Nachbarschaft zu der den Schutzbügel aufweisenden Konsolenwange gewährleistet, daß sich der Schutzbügel zumindest weitgehend gerade dort, wo sich das untere Ende des Handbremshebels und vorzugsweise auch des Umlenkhebels befindet, unterhalb des Handbremshebels bzw. Umlenkhebels und nicht weit seitlich von diesem befindet, so daß diese auch bereits bei einem schmalen Schutzbügel zuverlässig geschützt sind. Die Anzahl der für die Lagerung und den Schutz des Brems- und Umlenkhebels benötigten Teile ist minimal.

Vorteilhafterweise weist der äußere Rand des Schutzbügels einen gebogenen Gleitschuh auf. Ein derartiger Gleitschuh verbessert die Gleiteigenschaften der Zugvorrichtung bei gelöster Anhängerkupplung und verhindert ein Eingraben in die Fahrbahnoberfläche, das ein Überschlagen des Anhängers zur Folge haben kann. Weiterhin bildet ein derartiger Gleitschuh auch ein Schutzschild für die dahinterliegenden Teile.

Eine Bauteilverringerung ergibt sich, wenn der hintere Endbereich der den Schutzbügel aufweisenden Konsolenwange unmittelbar als Abstützbereich für einen auf den Handbremshebel einwirkenden Federkraftspeicher ausgebildet ist. Es ist hierdurch nicht mehr erforderlich, seitlich an die Konsolenwange eine zusätzliche Haltelasche für den Federkraftspeicher anzuschrauben oder anzuschweißen.

Zweckmäßigerweise ist im vorderen Bereich der den Schutzbügel aufweisenden Konsolenwange eine Führung für ein Abreißseil vorgesehen. Hierdurch kann ein unkontrolliertes Durchhängen des Abreiß- oder Sicherheitsseiles im Bereich der Konsole verhindert werden.

Eine sehr einfache Ausführung ergibt sich, wenn die Führung für das Abreißseil aus einem angeschweißten Kettenglied oder einer im Gleitschuh vorgesehenen Durchgangsöffnung besteht.

Die Erfindung wird nachfolgend anhand der Zeichnungen beispielshaft näher beschrieben. In diesen zeigen:
- Figur 1 :: eine teilweise geschnittene Seitenansicht der erfindungsgemäßen Zugvorrichtung;
- Figur 2 :: eine Draufsicht der Zugvorrichtung von Figur 1;
- Figur 3 :: eine Vorderansicht der Zugvorrichtung von Figur 1;
- Figur 4 :: eine Seitenansicht der Zugvorrichtung von Figur 1 in einer auf dem Boden aufliegenden Position;
- Figur 5 :: eine Seitenansicht der den Schutzbügel tragenden Konsolenwange;
- Figur 6 :: eine Draufsicht der Konsolenwange von Figur 5; und
- Figuren 7A bis 7D :: Vertikalschnitte der Konsolenwange von Figur 5 längs der Linien A-A, B-B, C-C bzw. D-D.

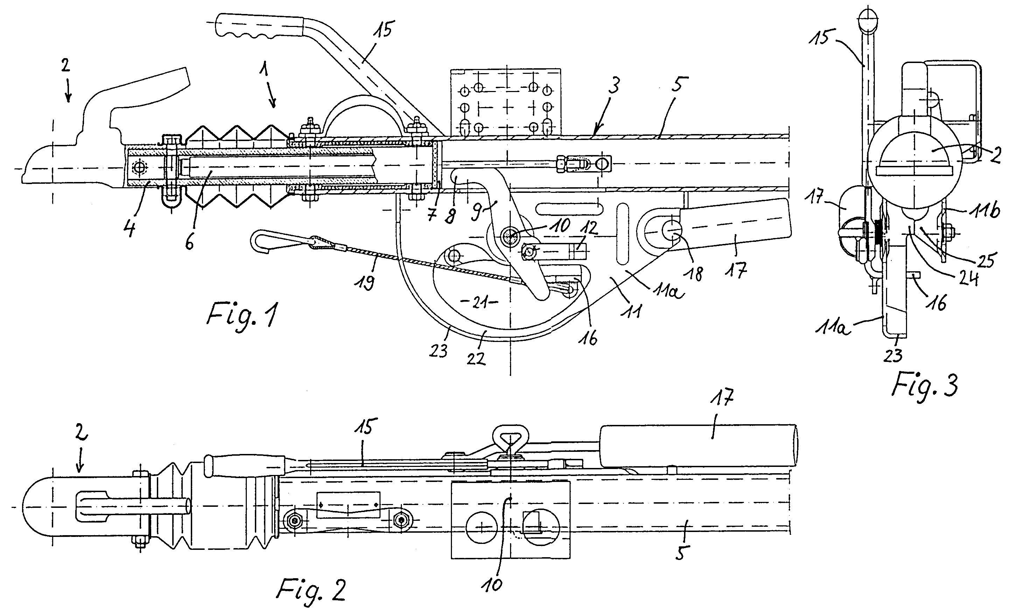

Aus den Figuren 1 bis 4 ist eine Zugvorrichtung mit Auflaufbremseinrichtung 1 ersichtlich, die beispielsweise bei Wohnwagen-, Boots- oder Marktanhängern verwendet wird und eine vordere Einhängevorrichtung 2 und einen rohrförmigen Mittelabschnitt 3 aufweist.

Im Mittelabschnitt 3 der Zugvorrichtung ist eine Zugstange 4 vorgesehen, die innerhalb eines rohrförmigen Gehäuses 5 mit rundem oder viereckigem Querschnitt gegen die Kraft eines Gasdruckstoßdämpfers 6 längsverschiebbar ist, um in bekannter Weise eine Auflaufbremsanlage zu betätigen. Dies erfolgt über eine Druckscheibe 7, die am hinteren Ende der Zugstange 4 befestigt ist und gegen eine Nase 8 eines Umlenkhebels 9 drückt. Dieser Umlenkhebel 9 ist um eine querstehende Schwenkachse 10 schwenkbar gelagert, die in einer Konsole 11 unterhalb des rohrförmigen Gehäuses 5 festgelegt ist. Die Konsole 11 besteht, wie nachfolgend noch näher ausgeführt wird, aus zwei weitgehend parallelen, unterschiedlich hohen und voneinander beabstandeten Konsolenwangen 11a, 11b, von denen in Figur 1 nur die hintere Konsolenwange 11a dargestellt ist, während die vordere Konsolenwange 11b (Figur 3) in Figur 1 weggelassen ist, um den Umlenkhebel 9 sichtbar zu machen. Der Umlenkhebel 9 befindet sich zwischen den beiden Konsolenwangen 11a, 11b.

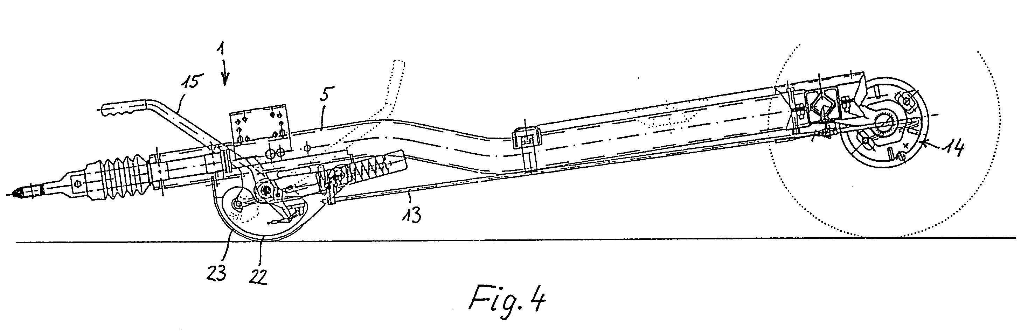

Bei einem Abbremsen des Zugfahrzeuges wird die Zugstange 4 nach hinten zunehmend in das Gehäuse 5 eingeschoben, wodurch die Druckscheibe 7 den Umlenkhebel 9 im Uhrzeigersinn dreht und eine unterhalb der Schwenkachse 11 am Umlenkhebel 9 schwenkbar gelagerte Haltelasche 12 nach vorne gezogen wird. Von der Haltelasche 12 aus erstreckt sich ein in Figur 4 schematisch dargestelltes Bremsgestänge 13 oder ein Bremsseil nach hinten zu Radbremsen 14.

Um die Schwenkachse 11 ist ebenfalls ein Handbremshebel 15 schwenkbar gelagert, der seitlich neben der Auflaufbremseinrichtung 1 und direkt außerhalb neben der Konsolenwange 11a angeordnet ist. Von der Schwenkachse 10 erstreckt sich der Handbremshebel 15 weiter nach unten und endet in einem Quervorsprung 16, der das untere Ende des Umlenkhebels 9 hintergreift und hierdurch beim Verschwenken im Uhrzeigersinn (Figur 1) den Umlenkhebel 9 in der gleichen Richtung verschwenkt, so daß die Radbremsen auch mittels des Handbremshebels 15 in Bremseingriff gebracht werden können.

Zur Unterstützung der Schwenkbewegung des Handbremshebels 15 ist weiterhin ein Federkraftspeicher 17 am hinteren stirnseitigen Endbereich der Konsolenwange 11a über einen querverlaufenden Haltezapfen 18 schwenkbar nach vorne abgestützt. Der Federkraftspeicher 17, beispielsweise eine Gasfeder, greift mit seiner Kolbenstange am Handbremshebel 15 an und kann so ausgebildet sein, daß er den Handbremshebel 15 nach Überschreiten einer Totpunktstellung selbständig in die Bremsposition überführt. Dies ist in Figur 4 gepunktet dargestellt.

Wie weiterhin aus Figur 1 hervorgeht, ist am unteren Ende des Handbremshebels 15 im Bereich des Quervorsprunges 16 ein Abreißseil 19 befestigt. Dieses Abreißseil 19 wird mit seinem vorderen Ende am Zugfahrzeug eingehakt und bringt den Handbremshebel 15 und damit den Umlenkhebel 9 und die Radbremsen in Bremsstellung, falls sich die Anhängerkupplung unbeabsichtigterweise vom Kraftfahrzeug löst.

Im folgenden wird die aus den beiden Konsolenwangen 11a, 11b bestehende Konsole 11 näher beschrieben.

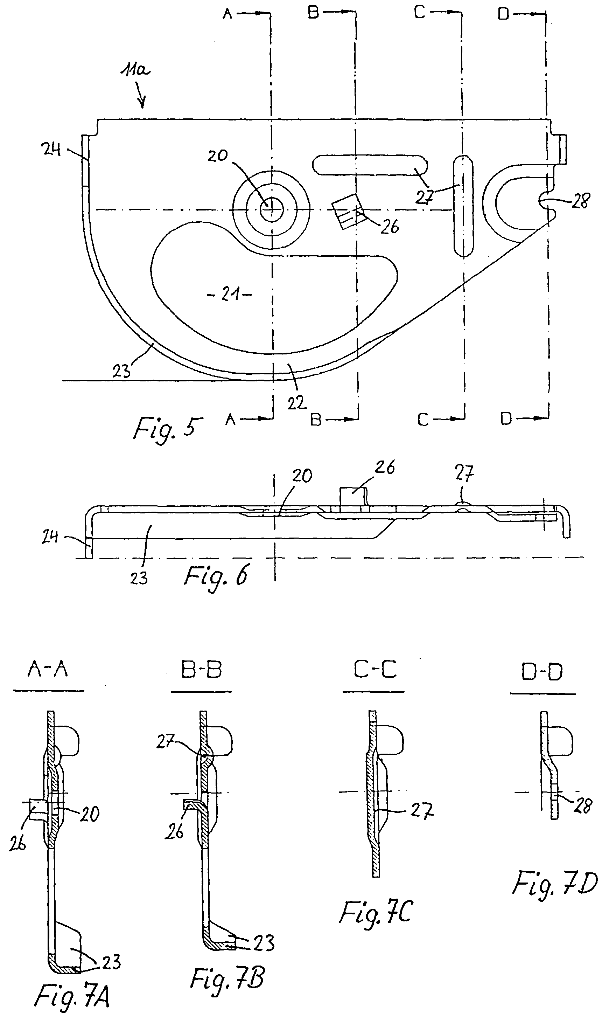

Die Konsolenwange 11a besteht aus einem im wesentlichen ebenen, stabilen Blechteil, das an der Unterseite des rohrförmigen Gehäuses 5 angeschweißt oder angeschraubt ist. Wie aus den Figuren 5 bis 7D hervorgeht, weist die Konsolenwange 11a eine Bohrung 20 auf, in welcher die Schwenkachse 10 des Handbremshebels 15 und des Umlenkhebels 9 gelagert ist. Die beiden die Bohrung 20 umgebenden konzentrischen Kreise zeigen, daß das Blechteil im Umgebungsbereich der Bohrung 20 leicht nach innen eingedellt ist. Unterhalb der Bohrung 20 befindet sich eine relativ große, nierenförmige Aussparung 21, durch die sich der untere Quervorsprung 16 des Handbremshebels 15 hindurch erstreckt.

Der Bereich unterhalb der Aussparung 21 ist als Schutzbügel 22 ausgebildet, dessen äußerer, d.h. unterer und linker Rand, mit einem gebogenen Gleitschuh 23 versehen ist. Dieser Gleitschuh 23 verläuft von der vorderen, d.h. in Figur 5 linken Stirnseite etwa ab der Höhe der Bohrung 20 kreisbogenförmig nach unten und hinten über einen Winkel von etwa 130°, so daß er sich unterhalb der gesamten Aussparung 21 erstreckt. Liegt die Zugvorrichtung auf dem Boden auf, liegt der Kontaktpunkt mit dem Boden, wie aus den Figuren 4 und 5 ersichtlich, ziemlich genau senkrecht unterhalb der Bohrung 20. Der Gleitschuh 23 kann aus einem senkrecht zur Vertikalhauptebene der Konsolenwange 11a abgebogenen Randbereich der Konsolenwange 11a oder aus einem Verbreiterungselement bestehen, das auf den unteren und vorderen Randbereich der Konsolenwange 11a aufgeschweißt wird.

Vom vorderen oberen Ende des Gleitschuhs 23 aus erstreckt sich in derselben Ebene ein Verbindungssteg 24 in Richtung der gegenüberliegenden Konsolenwange 11b (Figur 3), um an einem entsprechenden Verbindungssteg 25 der Konsolenwange 11b angeschweißt zu werden und einen entsprechenden stabilisierenden vorderen Quersteg zu bilden.

In Höhe der Bohrung 20, jedoch weiter hintenliegend, ist ferner ein Schwenkbegrenzungsanschlag für den Handbremshebel 15 in der Form eines nach außen gebogenen, quer abstehenden Zungenteiles 26 vorgesehen. Eindellungen 27 oberhalb bzw. hinter dem Zungenteil 26 stabilisieren die Konsolenwange 11a.

Im rückwärtigen Endbereich der Konsolenwange 11a ist ferner eine halbkreisförmige Aussparung 28 vorgesehen, in welche der Haltezapfen 18 des Federkraftspeichers 17 eingesetzt werden kann. Da der Federkraftspeicher 17 eine permanente Zugkraft auf den Handbremshebel 15 ausübt, wird der Haltezapfen 18 sicher in der Aussparung 28 gehalten.

Die gegenüberliegende Konsolenwange 11b erstreckt sich in vertikaler Richtung nur über etwa die Hälfte der Höhe der Konsolenwange 11a nach unten und hat vor allem die Aufgabe, das gegenüberliegende Lager für die Schwenkachse 10 zu bilden. Die Konsolenwange 11b besteht im wesentlichen aus einem parallel zur Konsolenwange 11a verlaufenden ebenen Blechteil, das ebenfalls an der Unterseite des rohrförmigen Gehäuses 5 der Auflaufbremseinrichtung 1 angeschweißt oder angeschraubt wird. Der Abstand zwischen den beiden Konsolenwangen 11a, 11b entspricht etwa demjenigen der Breite des rohrförmigen Gehäuses 5.

Das in Figur 1 gezeigte Abreißseil 19 kann im Bereich, wo es den Schutzbügel 22 oder den Gleitschuh 23 kreuzt, mittels eines dort angeschweißten Kettengliedes geführt sein. Alternativ hierzu ist es auch möglich, im Gleitschuh 23 eine Bohrung vorzusehen, durch welche das Abreißseil 19 hindurchtritt und dieses entsprechend führt.

## Patentansprüche

1. Zugvorrichtung mit Auflaufbremseinrichtung für Kraftfahrzeuganhänger mit einer sich von einem rohrförmigen Gehäuse (5) aus nach unten erstreckenden Konsole (11), an der ein Handbremshebel (15) und ein mit einem Bremsgestänge oder -seil (13) in Verbindung stehender Umlenkhebel (9) schwenkbar gelagert sind, wobei die Konsole (11) aus zwei unterschiedlich hohen, voneinander beabstandeten Konsolenwangen (11a, 11b) besteht, von denen eine einen unteren Schutzbügel (22) für den Handbremshebel (15) und den Umlenkhebel (9) aufweist, **dadurch gekennzeichnet**, daß die Konsolenwangen (11a, 11b) als am Gehäuse (5) angeschweißte oder angeschraubte stabile Blechteile ausgebildet sind und der Handbremshebel (15) in unmittelbarer Nachbarschaft zu der den Schutzbügel (22) aufweisenden Konsolenwange (11a) angeordnet ist.

2. Zugvorrichtung nach Anspruch 1, **dadurch gekennzeichnet**, daß der äußere Rand des Schutzbügels (22) einen gebogenen Gleitschuh (23) aufweist.

3. Zugvorrichtung nach Anspruch 1 oder 2, **dadurch gekennzeichnet**, daß der hintere Endbereich der den Schutzbügel (22) aufweisenden Konsolenwange (11a) unmittelbar als Abstützbereich für einen auf den Handbremshebel (15) einwirkenden Federkraftspeicher (17) ausgebildet ist.

4. Zugvorichtung nach einem der vorhergehenden Ansprüche, **dadurch gekennzeichnet**, daß im vorderen Bereich der den Schutzbügel (22) aufweisenden Konsolenwange (11a) eine Führung für ein Abreißseil (19) vorgesehen ist.

5. Zugvorrichtung nach Anspruch 4, **dadurch gekennzeichnet**, daß die Führung für das Abreißseil (19) aus einem angeschweißten Kettenglied oder einer im Gleitschuh (23) vorgesehenen Durchgangsöffnung besteht.

6. Zugvorrichtung nach einem der vorhergehenden Ansprüche, **dadurch gekennzeichnet**, daß an der Außenseite der den Schutzbügel (22) aufweisenden Konsolenwange (11a) ein Schwenkbegrenzungsanschlag für den Handbremshebel (15) vorgesehen ist.

7. Zugvorrichtung nach Anspruch 6, **dadurch gekennzeichnet**, daß der Schwenkbegrenzungsanschlag aus einem nach außen gebogenen, querabstehenden Zungenteil (26) der Konsolenwange (11a) besteht.
